# EUROPÄISCHE PATENTSCHRIFT

(11) **EP 3 505 373 B1**
(45) Veröffentlichungstag und Bekanntmachung des Hinweises auf die Patenterteilung: **11.08.2021**
(21) Anmeldenummer: 18211476.9
(22) Anmeldetag: 11.12.2018
(51) Int. Cl.: B60C 23/04

(54) **REIFENDRUCKÜBERWACHUNGSEINHEIT**
TYRE PRESSURE MONITORING DEVICE
UNITÉ DE SURVEILLANCE DE PRESSION DE PNEUS

(30) Priorität: 27.12.2017 DE 102017131300
(43) Veröffentlichungstag der Anmeldung: 03.07.2019
(73) Patentinhaber: Huf Baolong Electronics Bretten GmbH, 75015 Bretten (DE)
(72) Erfinder: Wagner, Markus, 71638 Ludwigsburg (DE); Vögeli, Patrick, 76227 Karlsruhe (DE); Kessler, Ralf, 76327 Pfinztal (DE)
(74) Vertreter: Twelmeier Mommer & Partner

(56) Entgegenhaltungen:
- EP-A1- 3 243 672
- WO-A1-2015/107203
- DE-U1-202015 101 654
- US-A1- 2016 339 750
- US-A1- 2017 282 855

## Beschreibung

Die Erfindung geht aus von einer Reifendrucküberwachungseinheit mit den im Oberbegriff des Anspruchs 1 angegebenen Merkmalen, wie sie aus EP 3 243 672 A1 bekannt ist.

Reifendrucküberwachungseinheiten enthalten einen Drucksensor zur Messung des Reifendrucks und eine Sendeeinrichtung zum Senden von Druckdaten. Bei gebräuchlichen Reifendrucküberwachungseinheiten werden Druckdaten als HF-Signale gesendet, etwa im Frequenzbereich von 315 MHz oder 433 MHz. Die Sendeeinrichtung wird von einem Mikrokontroller gesteuert, in den der Drucksensor und in der Regel auch ein Temperatursensor integriert sind. Der Mikrokontroller und die Sendeeinrichtung sind an eine Stromquelle angeschlossen, in der Regel eine Batterie oder ein Generator, beispielsweise ein piezoelektrischer Generator.

Reifendrucküberwachungseinheiten senden Druckdaten in der Regel in Form von Datentelegrammen, die eine charakteristische Kennung enthalten, die es einer Zentraleinheit des Fahrzeugs ermöglicht, ein empfangenes Datentelegramm einer Radposition zu zuordnen, und verhindert, dass von Reifendrucküberwachungseinheiten anderer Fahrzeuge gesendete Datentelegramme ausgewertet werden.

Reifendrucküberwachungssysteme werden zunehmend in Fahrzeugsicherheitssysteme integriert, die in kritischen Situationen in die Steuerung des Fahrzeugs eingreifen, beispielsweise indem sie bei Erhalt von Druckdaten, die einen platzenden Reifen anzeigen, eine Vollbremsung des Fahrzeugs einleiten.

Die Verwendung von charakteristischen Kennungen schützt zwar davor, dass zufällig empfangene Datentelegramme von Reifendrucküberwachungseinheiten anderer Fahrzeuge auf die Steuerung eines Fahrzeugs Einfluss nehmen, bietet aber nur einen unzureichenden Schutz vor gezielter Manipulation, etwa mittels eines Datentelegramms, das gezielt erzeugt und gesendet wird, um ein Fahrzeug zum Abbremsen und Anhalten zu zwingen. Da Reifendrucküberwachungseinheiten ihre charakteristische Kennung mit jedem Datentelegramm aussenden, kann diese charakteristische Kennung grundsätzlich von Dritten in Erfahrung gebracht und dann verwendet werden, um falsche Datentelegramme zur Täuschung eines Fahrzeugsicherheitssystems zu erzeugen.

Aufgabe der vorliegenden Erfindung ist es, einen Weg aufzuzeigen, wie die Sicherheit eines Reifendrucküberwachungssystems erhöht und eine dafür geeignete Reifendrucküberwachungseinheit geschaffen werden kann.

Diese Aufgabe wird durch eine Reifendrucküberwachungseinheit mit den im Anspruch 1 angegebenen Merkmalen gelöst. Vorteilhafte Weiterbildungen der Erfindung sind Gegenstand von Unteransprüchen.

Eine erfindungsgemäße Reifendrucküberwachungseinheit enthält zusätzlich zu einem Mikrokontroller, in den ein Drucksensor integriert ist, einen Bluetooth Low Energy Chip, in folgenden BLE-Chip. BLE-Chips werden beispielsweise von STMicroelectronics angeboten, insbesondere mit der Bezeichnung BlueNRG-1 und BlueNRG-2.

BLE-Chips enthalten einen Mikroprozessor, Speicher und eine Sendeeinrichtung, um Daten nach dem Industriestandard Bluetooth LE drahtlos im Frequenzbereich von 2,4 GHz zu übertragen. Dabei wird das ISM Frequenzband in 40 Kanäle mit einer Breite von jeweils 2 MHz unterteilt. Bei der Datenübertragung können die einzelnen Kanäle nach einem zwischen Sender und Empfänger ausgetauschten Schema gewechselt werden, so dass eine effiziente Verschlüsselung der Übertragung problemlos möglich ist. Beispielsweise kann die Reifendrucküberwachungseinheit bei Fahrtbeginn Datentelegramme zunächst in einem broadcast oder advertising mode aussenden, um eine Verbindung mit der Zentraleinheit des Fahrzeugs aufzubauen. Anschließend können die Reifendrucküberwachungseinheit und die Zentraleinheit des Fahrzeugs dann Daten in einem connected mode nach einem vereinbarten Schema weitgehend fälschungssicher austauschen.

Indem eine Reifendrucküberwachungseinheit Druckdaten mittels eines BLE-Chips an eine Zentraleinheit eines Reifendrucküberwachungssystems sendet, lässt sich somit die Sicherheit der Übertragung wesentlich erhöhen und praktisch ausschließen, dass die Zentraleinheit des Reifendrucküberwachungssystems durch falsche Datentelegramme getäuscht wird.

Um Bluetooth LE für eine sichere Übertragung von Reifendruckdaten zu nutzen, könnte man daran denken, den Mikroprozessor herkömmlicher Reifendrucküberwachungseinheiten einfach durch einen BLE-Chip zu ersetzen und diesen an einen Drucksensor anzuschließen. Diese Lösung wird mit einer erfindungsgemäßen Reifendrucküberwachungseinheit gemäß Anspruch 1 aber nicht verfolgt. Eine erfindungsgemäße Reifendrucküberwachungseinheit enthält einen BLE-Chip zusätzlich zu einem Mikrokontroller.

Der zusätzliche Hardwareaufwand von zwei Mikroprozessoren in unterschiedlichen Chips, nämlich in dem BLE-Chip einerseits und dem Mikrokontroller andererseits, scheint auf den ersten Blick unnötig und deshalb nachteilig. Tatsächlich ist der Einsatz eines Mikrokontrollers zusätzlich zu einem BLE-Chip für eine Reifendrucküberwachungseinheit aber vorteilhaft, da dadurch ein energiesparenderer Betrieb ermöglicht wird. BLE-Chips benötigen nämlich beim Übergang aus einem Schlaf- oder Standby-Zustand in einen aktiven Zustand wesentlich mehr Energie als herkömmliche Mikrokontroller, unter anderem wegen ihrer großen Flash-Speicher.

Ein Dauerbetrieb im aktiven Zustand kommt in einer Reifendrucküberwachungseinheit wegen des damit verbundenen Energieaufwands weder für den BLE-Chip noch für den Mikrokontroller in Frage. Der BLE-Chip muss deshalb ebenso wie der Mikrokontroller bei parkendem Fahrzeug abgeschaltet werden, d.h. in einen Schlafzustand übergehen. Auch bei parkendem Fahrzeug muss jedoch in regelmäßigen Zeitabständen eine Druckmessung durchgeführt werden, damit dem Fahrer eines Fahrzeugs bei Fahrtbeginn eine zuverlässige Reifendruckinformation geliefert werden kann. In einer Reifendrucküberwachungseinheit, die nur einen BLE-Chip enthält, müsste der BLE-Chip also bei parkendem Fahrzeug im Abstand von einigen Minuten aktiviert werden, um dann eine Druckmessung durchzuführen. Der damit verbundene Stromverbrauch wird durch eine erfindungsgemäße Reifendrucküberwachungseinheit vermieden, da die entsprechenden Druckmessungen von einem herkömmlichen Mikrokontroller durchgeführt werden. Der Mikrokontroller muss den BLE-Chip dann nur in den seltenen Fällen aktivieren, in denen ein signifikanter Druckabfall festgestellt wurde, so dass Druckdaten gesendet werden müssen.

Erfindungsgemäß kann die Reifendrucküberwachungseinheit bei parkendem Fahrzeug in einen Grundzustand übergehen, und aus dem Grundzustand durch Auftreten einer Druckänderung, die über einem vorgegebenen Schwellenwert liegt, und/oder durch Fahrtbeginn in einen aktiven Zustand übergehen. Bei einer erfindungsgemäßen Reifendrucküberwachungseinheit kann der Mikrokontroller den BLE-Chip aus einem Schlafzustand wecken, etwa wenn der Mikrokontroller bei einer Druckmessung einen kritischen Druckabfall feststellt (also einen Druckabfall, der über einem vorgegebenen Stellenwert liegt), einen signifikanten Druckanstieg, also ein Aufpumpen des Reifens, oder mit einem Beschleunigungssensor einen Fahrtbeginn feststellt.

In entsprechender Weise kann der Mikrokontroller dem BLE-Chip auch mitteilen, wenn der BLE-Chip voraussichtlich für längere Zeit nicht mehr benötigt wird und deshalb in seinen Schlafzustand übergehen kann. Beispielsweise kann der Mikrokontroller ein entsprechendes Signal an den BLE-Chip nach Ablauf einer vorgegebenen Zeitspanne nach dem Stillstand des Fahrzeugs senden, also wenn das Fahrzeug geparkt wurde.

Üblicher Weise werden während der Fahrt Druckdaten in regelmäßigen Zeitabständen, beispielsweise in der Größenordnung zwischen 10 Sekunden und 10 Minuten, gesendet. In der Regel ist es energetisch nicht wirtschaftlich, den BLE-Chip während der Fahrt nach jedem Sendevorgang wieder in seinen Schlafzustand versetzen. Bevorzugt bleibt deshalb der BLE-Chip während der Fahrt in seinem aktiven Zustand. Überraschenderweise kann auf diese Weise die Belastung der Stromquelle der Reifendrucküberwachungseinheit reduziert werden.

Bei herkömmlichen Reifendrucküberwachungseinheiten wird die Stromquelle im Wesentlichen nur durch Messvorgänge und durch Sendevorgänge belastet. Ein Sendevorgang erfolgt dabei unmittelbar im Anschluss an einen Messvorgang. Die Stromquelle hat bei einer herkömmlichen Reifendrucküberwachungseinheit also kurze Belastungsphasen für die Mess- und Sendetätigkeit auf die längere Phasen folgen, in denen die Stromquelle praktisch gar nicht belastet wird. Bei einer erfindungsgemäßen Reifendrucküberwachungseinheit können nun die Mess - und Sendevorgänge voneinander entkoppelt werden und so die Belastung der Stromquelle gleichmäßiger verteilt werden.

Eine weitere vorteilhafte Weiterbildung der Erfindung sieht dazu vor, dass in einem aktiven Zustand der Reifendrucküberwachungseinheit der Mikrokontroller Druckdaten an einem Datenausgang bereitstellt und der BLE-Chip die Druckdaten zu einem Zeitpunkt liest, der nicht mit dem Zeitpunkt des Bereitstellens der Daten synchronisiert ist, so dass die Druckdaten nach ihrem Bereitstellen innerhalb einer veränderlichen Zeitspanne von dem BLE-Chip gelesen werden. Beispielsweise kann der BLE-Chip in einem aktivierten Zustand Daten in ersten fest vorgegebenen Zeitabständen von dem Datenausgang des Mikrokontrollers lesen und der Mikrokontroller kann Daten an seinem Datenausgang in zweiten fest vorgegebenen Zeitabschnitten bereitstellen. Indem das Bereitstellen und das Lesen der Daten nicht miteinander synchronisiert sind, vergeht zwischen dem Bereitstellen und dem Lesen der Daten eine Zeitspanne, die sich im Wesentlichen zufällig ändert, insbesondere bei jeder erneuten Aktivierung des BLE-Chips ändert. Es können also Fälle auftreten, in denen der BLE-Chip Daten praktisch sofort nach ihrem Bereitstellen liest. Ebenso gut ist aber auch möglich, dass der BLE-Chip die Daten erst nach längerer Zeit liest.

Indem der BLE-Chip Daten in den vorgegebenen ersten Zeitabschnitten liest, ist aber gewährleistet, dass Daten spätestens nach der ersten vorgegebenen Zeitspanne gelesen werden. Diese Zeitspanne kann 10 Sekunden oder auch mehrere Minuten betragen. Diese Vorgehensweise ist insbesondere für das Senden von unkritischen Druckdaten gut geeignet, die nicht zeitkritisch sind und einer Zentraleinheit des Fahrzeugs auch mit einiger Verzögerung mitgeteilt werden können. Unkritische Druckdaten sind insbesondere Änderungen des Reifendrucks innerhalb eines vorgegebenen Bereichs.

Eine weitere vorteilhafte Weiterbildung der Erfindung sieht vor, dass sich die ersten Zeitabstände von den zweiten Zeitabständen unterscheiden, beispielsweise länger sind, etwa 1% bis 10% länger. Auf diese Weise wird zuverlässig erreicht, dass sich die Belastung der Batterie durch Sendetätigkeit einerseits und Messtätigkeit andererseits noch besser verteilt. Eine Verteilung der mit dem Messen und dem Senden verbundenen Belastung der Batterie wird aber auch schon dann erreicht, wenn die ersten und die zweiten Zeitabstände übereinstimmen. Da nämlich das Bereitstellen der Druckdaten und das Lesen der Druckdaten nicht synchronisiert sind, ergibt sich bei jeder neuen Aktivierung des BLE-Chips, also jedem neuen Aufwecken aus einem Schlafzustand, ein anderer Zeitversatz zwischen dem Bereitstellen und Lesen der Druckdaten.

Kritische Druckdaten, beispielsweise Druckdaten, die einen raschen Druckabfall anzeigen, sollten im Gegensatz zu unkritischen Druckdaten möglichst rasch gesendet werden. Eine weitere vorteilhafte Weiterbildung der Erfindung sieht deshalb vor, dass der Mikrokontroller kritische Druckdaten dem BLE-Chip auf eine Weise mitteilt, die den BLE-Chip veranlasst, diese Druckdaten unverzüglich zu senden, während der Mikrokontroller dem BLE-Chip unkritische Druckdaten auf eine Weise mitteilt, die dem BLE-Chip ein zeitverzögertes Senden der Druckdaten ermöglichen. Beispielsweise kann der Mikrokontroller dem BLE-Chip kritische Druckdaten zusammen mit einem Interrupt mitteilen. Der BLE-Chip kann dabei durch einen Interrupt veranlasst werden, Daten sofort von dem Datenausgang des Mikrokontrollers zu lesen und zu senden. Möglich ist aber auch, dass dem BLE-Chip kritische Druckdaten über einen anderen Kanal, etwa eine speziellen Dateneingang mitgeteilt werden. Unkritische Druckdaten können dagegen einfach nur an einem Datenausgang des Mikrokontrollers bereitgestellt werden, so dass diese -wie vorstehend beschrieben- dann irgendwann innerhalb einer Zeitspanne, die einige Sekunden oder auch mehrere Minuten, beispielsweise bis zu 10 Minuten, betragen kann, von dem BLE-Chip gelesen werden. Im Fall unkritischer Druckdaten weiß der Mikrokontroller also nicht, wann die Druckdaten gelesen und gesendet werden.

Kritische Datendaten können beispielsweise Druckdaten sein, bei denen eine Druckänderung einen vorgegebenen Schwellenwert übersteigt. Dementsprechend können unkritische Druckdaten sein, bei denen eine Druckänderung einen vorgegebenen Schwellenwert nicht übersteigt.

## Patentansprüche

1. Reifendrucküberwachungseinheit mit
einer Stromquelle,
einem Mikrokontroller, der einen Drucksensor aufweist und an die Stromquelle angeschlossen ist, und
einem Gehäuse, in dem die Stromquelle und der Mikroprozessor angeordnet sind,
wobei der Mikrokontroller in dem Gehäuse an einen BLE-Chip (Bluetooth Low Energy) angeschlossen ist,
**dadurch gekennzeichnet, dass**
der BLE-Chip in einem Grundzustand der Reifendrucküberwachungseinheit in einem Schlafzustand ist und von dem Mikrokontroller aktiviert wird, wenn die Reifendrucküberwachungseinheit aus dem Grundzustand in einen aktiven Zustand übergeht, und
wobei die Reifendrucküberwachungseinheit bei parkendem Fahrzeug in den Grundzustand übergeht und aus dem Grundzustand durch Auftreten eines Druckabfalls, der über einem vorgegebenem Schwellenwert liegt, und/oder durch Fahrtbeginn in einen aktiven Zustand übergeht.

2. Reifendrucküberwachungseinheit nach einem der vorstehenden Ansprüche, **dadurch gekennzeichnet, dass** in einem aktiven Zustand der Reifendrucküberwachungseinheit der Mikrokontroller Druckdaten an einem Datenausgang bereitstellt und der BLE-Chip die Druckdaten zu einem Zeitpunkt liest, der nicht mit dem Zeitpunkt des Bereitstellens der Daten synchronisiert ist, so dass die Druckdaten nach ihrem Bereitstellen innerhalb einer veränderlichen Zeitspanne von dem BLE-Chip gelesen werden.

3. Reifendrucküberwachungseinheit nach einem der vorstehenden Ansprüche, **dadurch gekennzeichnet, dass** der BLE-Chip in einem aktivierten Zustand Daten in ersten fest vorgegebenen Zeitabständen von dem Datenausgang des Mikrokontrollers liest und der Mikrokontroller Daten an seinem Datenausgang in zweiten fest vorgegebenen Zeitabständen bereitstellt, wobei das Bereitstellen und das Lesen der Daten nicht miteinander synchronisiert sind.

4. Reifendrucküberwachungseinheit nach Anspruch 3, **dadurch gekennzeichnet, dass** die ersten Zeitabstände eine andere Länge als die zweiten Zeitabstände haben, vorzugsweise größer als die zweiten Zeitabstände sind.

5. Reifendrucküberwachungseinheit nach einem der vorstehenden Ansprüche, **dadurch gekennzeichnet, dass** der Mikrokontroller kritische Druckdaten dem BLE-Chip auf eine Weise mitteilt, die den BLE-Chip veranlasst, diese Druckdaten unverzüglich zu senden, während der Mikrokontroller dem BLE-Chip unkritische Druckdaten auf eine Weise mitteilt, die dem BLE-Chip ein zeitverzögertes Senden der Druckdaten ermöglichen.

6. Reifendrucküberwachungseinheit nach einem der vorstehenden Ansprüche, **dadurch gekennzeichnet, dass** der Mikrokontroller kritische Druckdaten dem BLE-Chip zusammen mit einem Sendebefehl übermittelt.

7. Reifendrucküberwachungseinheit nach einem der vorstehenden Ansprüche, **dadurch gekennzeichnet, dass** der Mikrokontroller kritische Druckdaten an den BLE-Chip zusammen mit einem Interrupt überträgt.

## Claims

1. Tyre pressure monitoring unit comprising
a power source,
a microcontroller, which comprises a pressure sensor and is connected to the power source, and
a housing, in which the power source and the microprocessor are arranged,
wherein the microcontroller is connected to a BLE (Bluetooth Low Energy) chip in the housing; **characterized in that**,
in a default state of the tyre pressure monitoring unit, the BLE chip is in a sleep state and is activated by the microcontroller when the tyre pressure monitoring unit transitions from the default state into an active state, and wherein the tyre pressure monitoring unit transitions into the default state when the vehicle is parked and transitions out of the default state into an active state due to the occurrence of a pressure drop below a preset threshold value, and/or due to starting to drive.

2. Tyre pressure monitoring unit according to any one of the preceding claims, **characterized in that**, in an active state of the tyre pressure monitoring unit, the microcontroller provides pressure data to a data output and the BLE chip reads the pressure data at a point in time that is not synchronized with the point in time of the data provision so that the pressure data is read by the BLE chip after it is provided within a variable period of time.

3. Tyre pressure monitoring unit according to any one of the preceding claims, **characterized in that**, in an activated state, the BLE chip reads data at first fixed preset time intervals from the data output of the microcontroller, and the microcontroller provides data at its data output at second fixed preset time intervals, wherein the provision and reading of the data are not synchronized with one other.

4. Tyre pressure monitoring unit according to Claim 3, **characterized in that** the first time intervals have a different length than the second time intervals, preferably being greater than the second time intervals.

5. Tyre pressure monitoring unit according to any one of the preceding claims, **characterized in that** the microcontroller communicates critical pressure data to the BLE chip in a way that causes the BLE chip to immediately send these pressure data while the microcontroller communicates uncritical pressure data to the BLE chip in a way that allows the BLE chip to send the pressure data in a time-delayed manner.

6. Tyre pressure monitoring unit according to any one of the preceding claims, **characterized in that** the microcontroller transmits critical pressure data to the BLE chip together with a send command.

7. Tyre pressure monitoring unit according to any one of the preceding claims, **characterized in that** the microcontroller transmits critical pressure data to the BLE chip together with an interrupt.

## Revendications

1. Unité de surveillance de pression de pneus, dotée d'une source de courant,
d'un microcontrôleur, qui comporte un capteur de pression et qui est connecté sur la source de courant, et
d'un boîtier, dans lequel sont placés la source de courant et le microprocesseur,
dans le boîtier, le microcontrôleur étant connecté sur une puce BLE (Bluetooth Low Energy), **caractérisée en ce que**
dans un mode de base de l'unité de surveillance de pression de pneus, la puce BLE est dans un mode veille et est activée par le microcontrôleur lorsque l'unité de surveillance de pression de pneus passe du mode de base dans un mode actif, et
lorsque le véhicule est en stationnement, l'unité de surveillance de pression de pneus passant en mode de base et lors de l'apparition d'une baisse de pression supérieure à une valeur seuil prédéfinie et/ou en démarrage de parcours, passant du mode de base dans un mode actif.

2. Unité de surveillance de pression de pneus selon l'une quelconque des revendications précédentes, **caractérisée en ce que** dans un mode actif de l'unité de surveillance de pression de pneus, le microcontrôleur met à disposition des données de pression sur une sortie de données et la puce BLE lit les données de pression à un moment qui n'est pas synchronisé avec le moment de la mise à disposition des données, de sorte qu'après leur mise à disposition, les données de pression soient lues par la puce BLE dans une période variable.

3. Unité de surveillance de pression de pneus selon l'une quelconque des revendications précédentes, **caractérisée en ce que** dans un mode activé, dans des premiers intervalles de temps fixement prédéfinis, la puce BLE lit des données à partir de la sortie de données du microcontrôleur et le microcontrôleur met à disposition des données sur sa sortie de données dans des deuxièmes intervalles de temps fixement prédéfinis, la mise à disposition et la lecture des données n'étant pas synchronisées l'une avec l'autre.

4. Unité de surveillance de pression de pneus selon la revendication 3, **caractérisée en ce que** les premiers intervalles de temps ont une longueur différente de celle des deuxièmes intervalles de temps, de préférence sont supérieurs aux deuxièmes intervalles de temps.

5. Unité de surveillance de pression de pneus selon l'une quelconque des revendications précédentes, **caractérisée en ce que** le microcontrôleur communique des données de pression critiques à la puce BLE d'une manière qui incite la puce BLE à envoyer directement les données de pression, alors que le microcontrôleur communique à la puce BLE des données de pression non critiques d'une manière permettant à la puce BLE un envoi temporisé des données de pression.

6. Unité de surveillance de pression de pneus selon l'une quelconque des revendications précédentes, **caractérisée en ce que** le microcontrôleur transmet à la puce BLE des données de pression critiques, conjointement avec un ordre d'envoi.

7. Unité de surveillance de pression de pneus selon l'une quelconque des revendications précédentes, **caractérisée en ce que** le microcontrôleur transmet à la puce BLE des données de pression critiques, conjointement avec une interruption.
